# EUROPÄISCHE PATENTSCHRIFT

(11) **EP 1 745 602 B1**
(45) Veröffentlichungstag und Bekanntmachung des Hinweises auf die Patenterteilung: **16.12.2009**
(21) Anmeldenummer: 05716665.4
(22) Anmeldetag: 11.02.2005
(51) Int. Cl.: H04L 12/40, B60R 16/02

(54) **KOMMUNIKATIONS- UND/ODER STEUERGERÄT UND VERFAHREN ZUR ERKENNUNG VON VERKLEMMUNGSZUSTÄNDEN BEI SOLCHEN KOMMUNIKATIONS- UND/ODER STEUERGERÄTEN**
COMMUNICATION AND/OR CONTROL APPARATUS AND METHOD FOR DETECTING LOCKING STATES IN SAME
APPAREIL DE COMMUNICATION ET/OU DE COMMANDE ET PROCEDE DE DETECTION D'ETATS DE BLOCAGE DANS CES APPAREILS

(30) Priorität: 29.04.2004 DE 102004022132
(43) Veröffentlichungstag der Anmeldung: 24.01.2007
(73) Patentinhaber: Continental Aktiengesellschaft, 30165 Hannover (DE)
(72) Erfinder: GROTENDORST, Jörg, 30823 Garbsen (DE)
(74) Vertreter: Finger, Karsten
(86) Internationale Anmeldenummer: PCT/EP2005/050606
(87) Internationale Veröffentlichungsnummer: WO 2005/107171

(56) Entgegenhaltungen:
- DE-A1- 10 160 348
- DE-A1- 10 240 669
- US-B1- 6 292 910
- PATENT ABSTRACTS OF JAPAN Bd. 1999, Nr. 11, 30. September 1999 (1999-09-30) & JP 11 163905 A (YAZAKI CORP), 18. Juni 1999 (1999-06-18)

## Beschreibung

Die Erfindung betrifft ein Verfahren zur Erkennung von Verklemmungszuständen bei Kommunikations- und/oder Steuergeräten, die mit einem Datenbus verteilt miteinander vernetzt sind.

Die Erfindung betrifft weiterhin ein Kommunikations- und/oder Steuergerät mit einer Schnittstelle zur Verschaltung mit einem Datenbus und Vernetzung mit weiteren Kommunikations- und/oder Steuergeräten.

In komplexen technischen Systemen, bei denen Kommunikations- und/oder Steuergeräte über einen Datenbus miteinander vernetzt sind, muss die Sendebereitschaft und Funktionsfähigkeit der Kommunikations- und/oder Steuergeräte regelmäßig überwacht werden. Dies ist insbesondere für sicherheitskritische Anwendungen in Kraftfahrzeugen, wie beispielsweise Airbag-Steuergeräten etc. unabdingbar.

Hierzu kann zunächst ausgewertet werden, ob von den Kommunikation- und/oder Steuergeräten regelmäßig Nachrichten ausgesandt werden.

Ein Problem tritt jedoch auf, wenn sich die Kommunikations- und/oder Steuergeräte in einem Verklemmungs-Zustand befinden und Nachrichten aussenden, obwohl das Kommunikations- und/oder Steuergerät blockiert ist und seine eigentliche Aufgabe nicht mehr erfüllen kann. Ein Verklemmungs-Zustand ist ein Zustand, bei dem zwei Prozesse, denen jeweils ein Betriebsmittel zugeordnet ist, auf den jeweils anderen Prozess beispielsweise zur Freigabe des Betriebsmittels wartet, und sich beide Prozesse dadurch gegenseitig blockieren. Sie sind damit zwar in der Lage, noch regelmäßig Nachrichten auszusenden. Für die Durchführung des eigentlichen Prozesses sind sie hingegen blockiert.

Aus der JP 11163905 A ist ein Verfahren zur Multiplexübertragung von Daten über einen Datenbus in einem Kraftfahrzeug bekannt, bei dem Datenänderungen erkannt und mit einem Update-Bit indiziert werden.

Weiterhin ist aus der JP 11163903 A ein Multiplexübertragungsverfahren für Daten über einen Datenbus in einem Kraftfahrzeug bekannt, bei dem die Verbindung einer Kommunikationseinheit des rufenden Teilnehmers mit dem Datenbus detektiert wird und erst dann die Datenübertragung erfolgt.

Die Druckschrift US6292910B1 offenbart ein Verfahren zur Erkennung eines Verklemmungszustandes in einem Datenbus eines elektronischen Systems. Das elektronische System beinhaltet einen Aufspühr-Schaltkreis, um die Transaktionen des Datenbus zu überwachen und anzuzeigen, wobei eine Warteschleife und eine Wiederholungsschleife vorhanden sind. Ebenso beinhaltet das elektronische System einen Zähler-Schaltkreis, um die Transaktionen des Aufspühr-Schaltkreises eine vorgegebene Anzahl von Schritten zu ermitteln und ggf. einen Trigger zu setzen. Zu Beginn des Verfahrens wird die Zieladresse mit einer gespeicherten Adresse verglichen.

Die Druckschrift DE10160348A1 offenbart ein Verfahren und ein System zur Informationsübertragung in Kraftfahrzeugen. Die Informationsübertragung findet dabei zwischen zwei über einen Datenbus verbundenen Steuereinheiten statt. Es werden mindestens zwei die Informationen repräsentierenden Botschaften und eine zusätzliche Information übermittelt, wobei jeder Botschaft eine Betriebsgröße zugeordnet ist, die Betriebsgrößen verschiedene Formate haben und nicht gleichzeitig vorliegen. Bei dem Verfahren wird im Rahmen der Botschaft der jeweils nicht vorliegenden Betriebsgröße die zusätzliche Information übertragen, die eine Überprüfung der übermittelten Botschaften erlaubt.

Bei den herkömmlichen Verfahren werden Verklemmungszustände erkannt, in dem zusammen mit der zu übertragenden Nachricht ein Überwachungssignal des Senders, wie zum Beispiel einem Botschaftszähler mit übertragen wird. Diese Zusatzinformation dient nicht der Übertragung von Funktionsinhalten oder Funktionssignalen, sondern lediglich zur Überwachung, um bei einem die Nachricht empfangenden Kommunikation- und/oder Steuergerät einen eventuellen Verklemmungszustand des senderiden Kommunikations- und/oder Steuergeräts erkennen zu können. Durch diese Zusatzinformation wird die Nachrichtenlänge nachteilig vergrößert und die Datenbusauslastung nachteilig erhöht.

Aufgabe der Erfindung ist es daher, ein verbessertes Verfahren zur Erkennung von Verklemmungszuständen bei Kommunikations- und/oder Steuergeräten zu schaffen, die mit einem Datenbus verteilt miteinander vernetzt sind, wobei die Auslastung des Datenbusses durch Reduzierung der Nachrichtenlänge verringert werden soll.

Aufgabe der Erfindung ist es weiterhin, ein entsprechend verbessertes Kommunikations- und/oder Steuergerät zu schaffen.

Die Aufgabe wird mit dem Verfahren gemäß Anspruch 1 gelöst.

Anstelle der bisherigen Zusatzinformation wird somit nunmehr vorgeschlagen, zunächst die Änderungen der Nachricht von einer Sendesequenz zur nächsten zu überprüfen. Sofern sich die Nachricht ändert, kann sich das sendende Kommunikations- und/oder Sendegerät nicht in einem Verklemmungszustand (deadlock) befinden. Sofern der Nachrichteninhalt aufgrund des Betriebszustands konstant ist, wird ein Botschaftszähler vorzugsweise nach einer definierten oder variablen Auslösezeit in die übertragende Nachricht selbst codiert, so dass der Nachrichtenbereich für ein Zusatzsignal entfallen kann. Durch Decodieren des Botschaftszählers und Auswertung desselben kann dann ein Verklemmungszusbnd erkannt werden.

Das Codieren des Botschaftszählers in die Nachricht erfolgt vorzugsweise durch Wechsel der Codierung für einen definierten Bitabschnitt der digitalen Nachricht Sofern ein Wechsel der Codierung in dem bestimmten Bitabschnitt erkannt wird, ist die übertragende Nachricht in Ordnung und das Kommunikations- und/oder Steuergerät befindet sich nicht in einem Verklemmungszustand. Ansonsten, wenn kein Wechsel der Codierung in dem bestimmten Bitabschnitt vorliegt, kann nach einer definierten Wartezeit auf das Vorliegen eines Verklemmungszustandes geschlossen werden.
Die Erfindung wird nachfolgend anhand der beigefügten Zeichnungen näher erläutert. Es zeigen:
- Figur 1 -: Skizze eine Kraftfahrzeuges mit Datenbus und verteilten Kommunikations- und/oder Steuergeräten;
- Figur 2 -: Signalblock einer übertragenden Nachricht mit Zusatzinformation zur Kennzeichnung eines möglichen Veridemmungszustandes;
- Figur 3-: Signalblöcke einer übertragenden Nachricht mit in die Nachricht codierten Botschaftszähler nach Ablauf einer Auslösezeit.

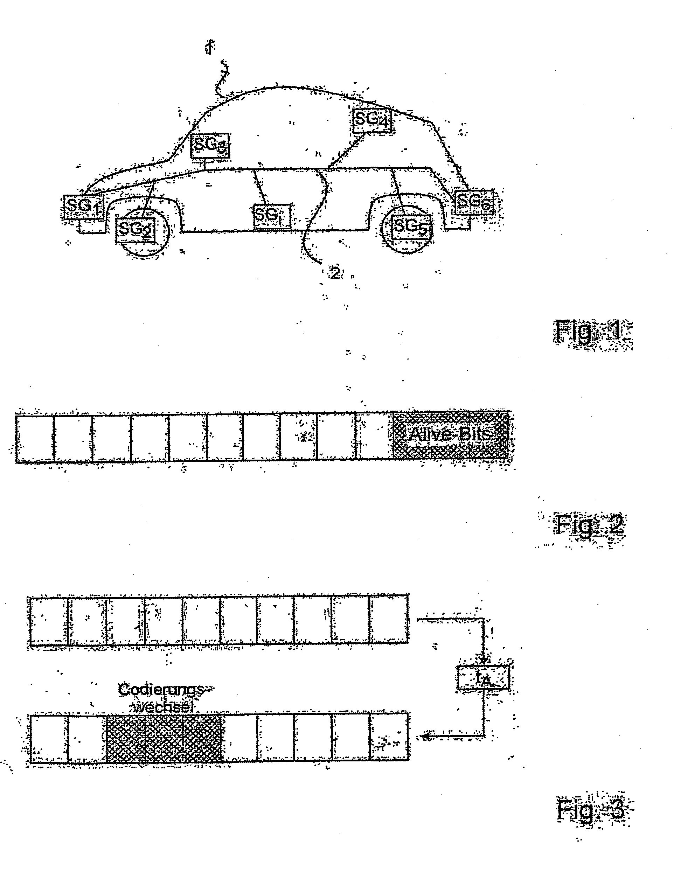

Die Figur 1 lässt eine Skizze eines Kraftfahrzeuges 1 mit einem Datenbus 2 erkennen, an den eine Vielzahl von Kommunikations- und/oder Steuergeräte SGᵢ mit i =1...N angeschlossen sind. Solche Kommunikations- und/oder Steuergeräte SGᵢ können beispielsweise Airbag-Steuergeräte, Radsensoren, Antiblockiersystem-Steuergeräte o. ä. sein. Da diese Kommunikations- und/oder Steuergeräte SGᵢ unter Umständen sicherheitskritisch sind, muss deren Betriebsfähigkeit ständig überwacht werden. Insbesondere sind Verklemmungszustände sicherheitskritisch, bei denen sich von den Kommunikations- und/oder Steuergeräten SGᵢ durchgeführte oder kontrollierte Prozesse gegenseitig blockieren.

Die Figur 2 lässt einen Signalblock zur Übertragung einer Nachricht zusammen mit einer Zusatzinformation in herkömmlicher Weise zum Beispiel als Botschaftszähler erkennen. Mit der Zusatzinformation in Form von Alive-Bits, die nicht der Übertragung von Funktionssignalen dienen, wird die Funktionsfähigkeit des sendenden Kommunikations- und/oder Steuergerätes SGᵢ überwacht.

Die Figur 3 lässt Signalblöcke erkennen, wie sie bei dem erfindungsgemäßen Verfahren zur Erkennung von Verklemmungszuständen eingesetzt werden.

Ein Signalblock beinhaltet nur die übertragende Nachricht selbst, gegebenenfalls mit weiteren Steuerinfoanationen, jedenfalls ohne Alive-Bits zur Überwachung der Funktionsfähigkeit des sendenden Kommunikations- und/oder Steuergerätes SGᵢ.

In einem fortlaufend wiederholten Schritt wird die aktuell von einem sendenden Kommunikations- und/oder Steuergerät SGᵢ übertragene Nachricht mit einer vorher übertragenen Nachricht verglichen. Sofern die Nachrichten unterschiedlich sind, kann kein Verklemmungszustand bei dem sendenden Kommunikations- und/oder Steuergerät SGᵢ vorliegen.

Für den Fall, dass die Nachrichten gleich sind, wird nach Ablauf einer Auslösezeit t_{A} ein Botschaftszähler durch das sendende Kommunikations- und/oder Steuergerät in die übertragende Nachricht selbst kodiert.

Da die Nachricht aufgrund eines gleichbleibenden Systemzustands oder aufgrund eines Verklemmungszustands gleich sein kann, wird im folgenden der Botschaflszähler überwacht. Hierzu wird der Botschaftszähler in dem die Nachricht empfangenden Kommunikations- und/oder Steuergerät SGᵢ decodiert und bei Änderung des Botschaftszählers festgestellt, dass kein Verklemmungszustand bei dem sendenden Kommunikations- und/oder Steuergerät SGᵢ vorliegt. Ansonsten wird nach einer definierten Wartezeit ein Verklemmungszustand bei dem sendenden Kommunikations- und/oder Steuergerät SGᵢ erkannt

Das Codieren des Botschaftszählers in die Nachricht erfolgt durch Wechsel der Codierung für einen definierten Bit-Abschnitt. Für den Fall, dass ein Wechsel der Codierung für den bestimmten Bit-Abschnitt von dem empfangenden Kommunikations- und/oder Steuergerät SGᵢ erkannt wird, liegt kein Verklemmungszustand vor. Ansonsten kann nach einer definierten Wartezeit t_{W} auf ein Verklemmungszustand geschlossen werden.

## Patentansprüche

1. Verfahren zur Erkennung von Verklemmungszuständen bei Kommunikations- und/oder Steuergeräten (SGᵢ), die mit einem Datenbus (2) verteilt miteinander vernetzt sind, mit den Verfahrensschritten
- Vergleichen einer aktuellen von einem sendenden Kommunikations- und/oder Steuergerät (SGᵢ) übertragenen Nachricht mit einer vorher übertragenen Nachricht und
- Feststellen, dass kein Verklemmungszustand bei dem sendenden Kommunikations- und/oder Steuergerät (SGᵢ) vorliegt, wenn die Nachrichten unterschiedlich sind,
**gekennzeichnet durch**
- Codieren eines Botschaftszählers **durch** das sendende Kommunikations- und/oder Steuergerät (SGᵢ) in die übertragende Nachricht selbst, wenn die Nachrichten gleich sind,
- Decodieren des Botschaftszählers in einem die Nachricht empfangenden Kommunikations- und/oder Steuergerät (SGᵢ) und
- Feststellen, dass kein Verklemmungszustand bei dem sendenden Kommunikations- und Steuergerät (SGᵢ) vorliegt, wenn sich der Wert des Botschaftszählers im Vergleich mit einem vorhergehenden Wert des Botschaftszählers einer vorher übertragenen Nachricht geändert hat, und
- Feststellen eines Verklemmungszustands bei dem sendenden Kommunikations- und/oder Steuergerät (SGᵢ), wenn sich der Wert des Botschaftszählers nach einer definierten Wartezeit (t_{W}) nicht geändert hat,
- wobei das Codieren des Botschaftszählers in die Nachricht **durch** Wechsel der Codierung für einen definierten Bit-Abschnitt der digitalen Nachricht erfolgt.

2. Verfahren nach Anspruch 1, **dadurch gekennzeichnet, dass** das Codieren des Botschaftszählers nach einer definierten Auslösezeit (t_{A}) erfolgt.

3. Kommunikations- und/oder Steuergerät (SGᵢ) mit einer Schnittstelle zur Verschaltung mit einem Datenbus (2) und Vernetzung mit weiteren Kommunikations- und/oder Steuergeräten (SGᵢ), **dadurch gekennzeichnet, dass** das Kommunikations- und/oder Steuergerät zur Durchführung des Verfahrens nach einem der vorhergehenden Ansprüche ausgebildet ist.

## Claims

1. Method for detecting locking states in communication and/or control apparatuses (SGᵢ) which are networked to one another in a distributed manner using a data bus (2), with the following method steps
- a current message which is transmitted by a transmitting communication and/or control apparatus (SGᵢ) is compared with a previously transmitted message, and
- it is determined that there is no locking state in the transmitting communication and/or control apparatus (SGᵢ) if the messages are different,
**characterized by** the fact that
- the transmitting communication and/or control apparatus (SGᵢ) codes a message counter into the actual message being transmitted if the messages are the same,
- the message counter is decoded in a communication and/or control apparatus (SGᵢ) that receives the message, and
- it is determined that there is no locking state in the transmitting communication and control apparatus (SGᵢ) if the value of the message counter has changed in comparison with a previous value of the message counter in a previously transmitted message, and
- a locking state in the transmitting communication and/or control apparatus (SGᵢ) is determined if the value of the message counter has not changed after a defined waiting time (t_{W}),
- the message counter being coded into the message by changing the coding for a defined bit section of the digital message.

2. Method according to Claim 1, **characterized in that** the message counter is coded after a defined initiation time (t_{A}).

3. Communication and/or control apparatus (SGᵢ) having an interface for connection to a data bus (2) and networking to further communication and/or control apparatuses (SGᵢ), **characterized in that** the communication and/or control apparatus is designed to carry out the method according to one of the preceding claims.

## Revendications

1. Procédé de détection de situations de blocage dans des appareils de communication et/ou de commande (SGᵢ) répartis et reliés par un bus de données (2), le procédé présentant les étapes qui consistent à :
- comparer à un message transmis précédemment un message transmis à un instant donné par un appareil de communication et/ou de commande (SGᵢ) émetteur,
- lorsque les messages sont différents, vérifier qu'il n'existe pas une situation de blocage sur l'appareil de communication et/ou de commande (SGᵢ) émetteur,
**caractérisé par** les étapes qui consistent à :
- lorsque les messages sont identiques, faire coder un compteur de messages par l'appareil de communication et/ou de commande (SGᵢ) émetteur dans le message proprement dit à transmettre,
- faire décoder les compteurs de messages dans un appareil de communication et/ou de commande (SGᵢ) qui reçoit le message et
- vérifier qu'il n'existe pas de situation de blocage dans l'appareil de communication et de commande (SGᵢ) émetteur si la valeur du compteur de messages s'est modifiée par rapport à une valeur précédente du compteur de messages d'un message transmis précédemment et
- vérifier qu'il existe une situation de coinçage sur l'appareil de communication et/ou de commande (SGᵢ) émetteur si la valeur du compteur de messages ne s'est pas modifiée après un temps d'attente (t_{w}) défini,
- le codage du compteur de messages dans le message s'effectuant par remplacement du codage pour une portion définie des bits du message numérique.

2. Procédé selon la revendication 1, **caractérisé en ce que** le codage du compteur de messages s'effectue après un temps de déclenchement (t_{A}) défini.

3. Appareil de communication et/ou de commande (SGᵢ) doté d'une interface de raccordement à un bus de données (2) et de réunion en réseau à d'autres appareils de communication et/ou de commande (SGᵢ),
**caractérisé en ce que**
l'appareil de communication et/ou de commande est configuré pour exécuter le procédé selon l'une des revendications précédentes.
